# EUROPÄISCHE PATENTSCHRIFT

(11) **EP 0 974 154 B1**
(45) Veröffentlichungstag und Bekanntmachung des Hinweises auf die Patenterteilung: **06.03.2002**
(21) Anmeldenummer: 98922658.4
(22) Anmeldetag: 07.04.1998
(51) Int. Cl.: H01H 15/00, H01H 1/24

(54) **SCHALTER**
SWITCH
COMMUTATEUR

(30) Priorität: 08.04.1997 DE 19714552
(43) Veröffentlichungstag der Anmeldung: 26.01.2000
(73) Patentinhaber: TRW Automotive Electronics & Components GmbH & Co. KG, 67677 Enkenbach/Alsenborn (DE)
(72) Erfinder: Priesemuth, Wolfgang, Dipl.-Ing., 83512 Wasserburg (DE)
(74) Vertreter: Eder, Thomas, Dr.-Ing.
(86) Internationale Anmeldenummer: EP9802016
(87) Internationale Veröffentlichungsnummer: WO9845866

(56) Entgegenhaltungen:
- DE-B- 1 145 725
- DE-B- 2 539 581
- GB-A- 2 115 225
- US-A- 4 950 847

## Beschreibung

Die Erfindung betrifft einen Schalter, gemäß dem Oberbegriff des Hauptanspruchs.

Ein solcher Schalter ist aus der DE 31 45 802 C2 bekannt. Die ortsfesten Kontakte sind durch streifenförmige Kontaktzungen gebildet, die durch die Grundplatte hindurch gesteckt oder mit der Grundplatte vergossen sind und die mit vorstehenden Stegen aus isolierendem Material versehen ist. Die aus Flachmaterial bestehende Leiteranordnung, die an dem Betätigungsteil befestigt ist, weist streifenförmig ausgebildete Kontaktzungen auf, die sich längs der ortsfesten Kontaktzungen bewegen, sodaß je nach Ausbildung der isolierenden Stege eine elektrische Verbindung zwischen den aufeinandergleitenden Kontaktzungen hergestellt wird oder nicht. Die Leiteranordnung kann zusätzlich zwischen den Kontaktzungen unterbrochen sein, sodaß sich unterschiedliche Schaltstellungen bzw. vorbestimmte elektrische Verbindungen herstellen lassen.

Der bekannte Schalter ist in seinem Aufbau verhältnismäßig aufwendig und wegen der streifenförmigen Kontakte nur sehr begrenzt miniaturisierbar.

In neuerer Zeit kommt insbesondere der Miniaturung von Schaltern, die in Kraftfahrzeugen eingesetzt werden, steigende Bedeutung zu. Wegen der zunehmenden Komfortausstattungen nimmt die Anzahl der erforderlichen Schalter zu. Gleichzeitig nimmt der Platz insbesondere in der Schalttafel, ab, da dort zusätzlich Navigationsbildschirme usw. untergebracht werden müssen.

Der Erfindung liegt die Aufgabe zugrunde, einen Schalter mit geringem Platzbedarf zu schaffen, der bei hoher Funktionssicherheit kostengünstig herstellbar ist und an die unterschiedlichste Anforderungen anpaßbar ist.

Diese Aufgabe wird mit den Merkmalen des Hauptanspruchs gelöst.

Bei dem erfindungsgemäßen Schalter sind die ortsfesten Kontakte durch einfache Drahtkontakte, d.h. durch je einen in vorbestimmter Weise gebogenen Draht gebildet. Ein solcher Drahtkontakt hat einen außerordentlich kleinen Raumbedarf, ist kostengünstig herstellbar und kann in einfacher Weise an einer Grundplatte befestigt werden. Die elektrische Leiteranordnung, die von den Schleifbügeln der Drahtkontakte überfahren wird, ist in einfacher Weise durch eine Schaltplatine gebildet, deren Schaltung bzw. deren Leitermuster die elektrischen Verbindungen zwischen den einzelnen Drahtkontakten in den verschiedenen Stellungen des Betätigungsteils, das die Schaltplatine trägt, bestimmt. Die Funktion des Schalters bzw. dessen Schaltstellungen können somit sozusagen durch Programmieren der Schaltplatine bestimmt werden. Für unterschiedlichste Anwendungen kann die gleiche Grundplatine verwendet werden, wobei lediglich das Muster der freiliegenden elektrischen Leitungen bzw. der von den Schleifbereichen der Drahtkontakte zu kontaktierenden Bereiche an die jeweilige Anforderung angepaßt wird.

Der Anspruch 2 kennzeichnet eine besonders einfache Ausführungsform der erfindungsgemäßen Drahtkontakte.

Mit den Merkmalen des Anspruchs 3 wird eine besonders sichere Aufnahme der Drahtkontakte in der Grundplatte erzielt, ohne daß irgendwelche Lötungen erforderlich sind.

Mit den Merkmalen des Anspruchs 4 wird erreicht, daß der erfindungsgemäße Schalter in einfacher Weise an komplexe Schaltungen bzw. Steuergeräte anschließbar ist.

Mit den Merkmalen des Anspruchs 5 wird die Betriebssicherheit des Schalters zusätzlich erhöht.

Die Ansprüche 6 bis 8 sind auf vorteilhafte Ausführungsformen der Schaltplatine gerichtet.

Mit den Merkmalen der Ansprüche 9 und 10 läßt sich die Haptik, d. h. das Betätigungsgefühl, des Schalters in vorteilhalfter Weise beeinflussen.

Der Anspruch 11 ist auf eine Ausführungsform des Schalters gerichtet, mit der außerordentlich viele Drahtkontakte mittels eines einzigen Betätigungsteils auf kompaktem Raum geschaltet werden können.

Die Ansprüche 12 bis 15 sind auf vorteilhafte Ausführungsformen der Schleifbereiche der Drahtkontakte gerichtet.

Insgesamt ist der erfindungsgemäße Schalter so weit miniaturisierbar, daß er eine Verbindung zwischen Mikromechanik (Mechanik des Schalters) und Elektronik (bestückte Leiterplatte usw.) ermöglicht.

Die Erfindung wird im Folgenden anhand schematischer Zeichnungen beispielsweise und mit weiteren Einzelheiten erläutert.

Es stellen dar:
- Fig. 1: einen Querschnitt durch einen Schalter,
- Fig. 2: eine Teilschnittansicht des Schalters gemäß Fig. 1, geschnitten in der Ebene II-II der Fig. 1,
- Fig. 3 bis 5: Aufsichten auf verschiedene Ausführungsformen von Schaltplatinen,
- Fig. 6: eine Detailansicht gemäß Fig. 2 einer abgeänderten Ausführungsform,
- Fig. 7: eine Detailansicht gemäß Fig. 2 einer abgeänderten Ausführungsform,
- Fig. 8: ein Beispiel der Befestigung eines Drahtkontaktes an einer Leiterplatte,
- Fig. 9: eine Detailschnittansicht eines Schleifbereiches, und
- Fig. 10: eine Detailschnittansicht einer abgeänderten Ausführungsform eines Schleifbereiches.

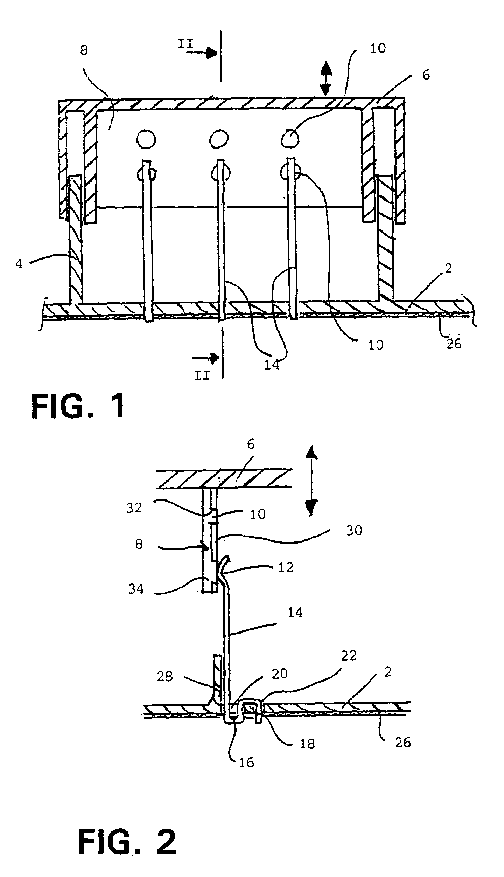

Gemäß Fig. 1 weist ein Schalter eine Grundplatte 2 auf, die einteilig mit Gehäusewänden 4 ausgebildet ist und selbst den Boden des Gehäuses des Schalters bildet. An den Gehäusewänden 4 ist ein Betätigungsteil 6 verschiebbar geführt. Die Verschiebbarkeit kann derart sein, daß das Betätigungsteil 6 zwei definierte Stellungen (eine eingeschobene Stellung und eine Ruhestellung) oder mehrere definierte Stellungen annehmen kann oder aber lediglich als Taster ausgebildet ist, wobei es von einer definierten äußeren Stellung in eine innere Stellung geschoben werden kann, aus der es in die äußere Stellung selbstätig zurück. Da nicht unmittelbar zur Erfindung gehörig wird die Führung des Betätigungsteils und seine gegebenenfalls vorhandene Verrastung mit den Gehäusewänden bzw. dem aus der Grundplatte 2 und den Gehäusewänden 4 bestehenden Unterteil des Gehäuses nicht erläutert. Ausführungsbeispiele für solche Führungen und Verrastungen sind in der DE 31 45 803 C2 beschrieben.

Starr mit dem Betätigungsteil 6 verbunden ist eine Schaltplatine 8, die sich etwa parallel zur Bewegungsrichtung des Betätigungsteils 6 erstreckt und die Kontaktbereiche 10 an den Stellen aufweist, an denen sich in den unterschiedlichen Stellungen des Betätigungsteils 6 als Schleifbügel 12 ausgebildete Schleifbereiche bzw. Kontaktabschnitte von Drahtkontakten 14 befinden (Fig. 2).

Die Schaltplatine 8 ist vorteilhafterweise ein insgesamt plattenförmiges Bauteil, das in nicht dargestellte Ausnehmungen des Betätigungsteils 6 eingesetzt ist und darin beispielsweise mittels Verkleben befestigt ist. Die Schaltplatine 8 kann auch auf am Betätigungsteil 6 ausgebildete Stegflächen aufgeklebt sein oder sonstwie an dem Betätigungsteil 6 befestigt sein.

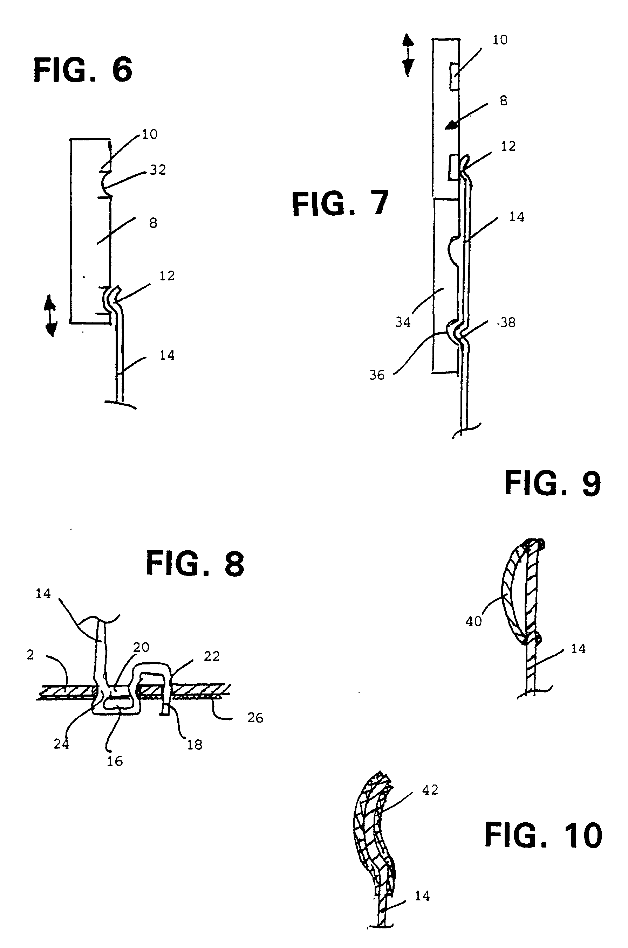

Wie in Fig. 2 sichtbar, ist jeder Drahtkontakt 14 durch einen in vorbestimmter Weise gebogenen Draht, vorteilhafterwise Federdraht, wie Beryliumdraht, der versilbert oder vergoldet sein kann, hergestellt. An seinem vom Schleifbügel 12 abgewandten Ende ist der Drahtkontakt 14 insgesamt S-förmig abgebogen, sodaß ein insgesamt U-förmiger Bügel 16 und ein freies Ende 18 entsteht. Der U-förmige Bügel 16 ist in einen Schlitz 20 der Grundplatte 2 eingesetzt; das freie Ende 18 durchragt ein in der Grundplatte 2 ausgebildetes Loch 22. Auf diese Weise ist der Drahtkontakt 14 verdrehsicher und sicher haltbar durch einfaches Einstecken in die Grundplatte 2 aufgenommen, wobei, wie in Fig. 8 dargestellt, im Bereich der Stege des U-förmigen Bügels 16 Einbauchungen 24 ausgebildet sein können, die eine Verrastung mit der Grundplatte 2 herbeiführen.

Im dargestellten Beispiel ist die Grundplatte 2 unmittelbar als eine Leiterplatte mit Leiterbahnen 26 ausgebildet, die die Drahtkontakte 14 elektrisch kontaktieren. Insbesondere wenn sich das elektrisch leitende Material der Leiterbahnen bis in die Wände des Schlitzes 20 und des Loches 22 hinein erstreckt, ist keinerlei Verlötung zwischen Drahtkontakt 14 und der als Leiterplatte ausgebildeten Grundplatte erforderlich. Es versteht sich, daß die Befestigung der Drahtkontakte an der Grundplatte in anderer Weise erfolgen kann, beispielsweise durch Vergießen, wobei Anschlußdrähte unmittelbar mit den Drahtkontakten verlötet oder verkrimpt oder anderweitig an ihnen befestigt werden können.

Wie aus Fig. 2 weiter ersichtlich, ist die Grundplatte 2 vorteilhafterweise mit Stegen 28 ausgebildet, die die elastisch vorgespannte Verschwenkung des Drahtkontaktes 14 gemäß Fig. 2 in Gegenuhrzeigerrichtung beschränken, sodaß die Schaltplatine 8, wenn sie von oben her in Eingriff mit dem Schleifbügel 12 kommt, dessen Außenseite bzw. konvexe Seite sicher erfaßt und der Schleifbügel 12 in elastische Anlage an die Schaltplatine 8 kommt.

Wie in Fig. 2 weiter ersichtlich, besteht die Schaltplatine 8 in diesem Ausführungsbeispiel aus einer dem Schleifbügel 12 zugewandten Kunststoffschicht 30, die im Bereich der Kontaktbereiche 10 mit Löchern 32 ausgebildet ist. Auf die Rückseite der Kunststoffschicht 30 ist eine metallisch leitende Schicht 34 aufgebracht, die sich durch die Löcher 32 hindurch erstreckt und in den Kontaktbereichen 10 freiliegt.

Die Schaltplatine 8 kann alternativ auch derart ausgebildet sein, daß eine metallische Grundplatte mit einer Kunststoffmaske abgedeckt ist, die im Kontaktbereich 10 durchlocht ist. In diesem Fall sind die Kontaktbereiche 10 vertieft.

Die Schaltplatte besteht vorteilhafterweise aus Si-Cu und kann zusätzlich versilbert oder vergoldet sein.

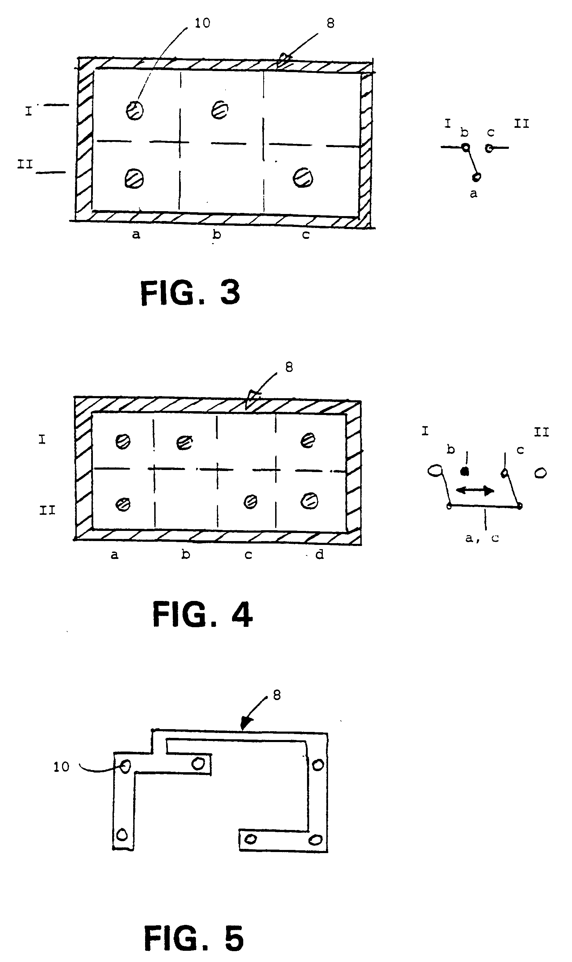

Alternativ kann die Schaltplatine 8 auch aus einer Metallplatte ausgestanzt sein (Fig. 5) und auf eine vorteilhafterweise aus Kunststoff bestehende Grundplatte aufgebracht sein, so daß vorbestimmte Kontaktbereiche vorhanden sind und in vorbestimmter Weise elektrisch miteinander verbunden sind.

Die beschriebenen Beispiele für die Ausbildung der Schaltplatine 8 sind in keiner Weise abschließend.

Fig. 3 zeigt ein Ausführungsbeispiel einer Schaltplatine 8 mit einer Metallplatte, die nach oben (zum Betrachter hin) mit einer Kunststoffschicht abgedichtet ist, sodaß nur die Kontaktbereiche 10 an vorbestimmten Stellen freiliegen. Die schraffierten Flächen sind leitende Flächen, die in elektrisch leitender Verbindung miteinander stehen. Die dargestellte Schaltplatine 8 wird in einem Schalter verwendet, der drei nebeneinander angeordnete Drahtkontakte hat, die den drei nebeneinander angeordneten Bereichen der Schaltplatine gemäß Fig. 8 entsprechen. Die beiden übereinander angeordneten Bereiche jedes der nebeneinander angeordneten Bereichen entsprechen zwei Schaltstellungen I und II. Wie ersichtlich, ist der linke (nicht dargestellte) Drahtkontakt a sowohl in der Stellung I als auch in der Stellung II mit einem elektrisch leitenden Kontaktbereich 10 verbunden. Für den mittleren Drahtkontakt b ist lediglich in der Stellung I ein Kontaktbereich 10 vorhanden. In der Stellung II besteht keine elektrische Verbindung. Ähnlich ist für den rechten Drahtkontakt c lediglich in der Stellung II ein Kontaktbereich 10 zugänglich, wo hingegen I kein Kontaktbereich gesehen ist. Das elektrische Ersatzbild des Schalters ist in Fig. 3 rechts dargestellt und entspricht einem Umschalter.

Fig. 4 zeigt eine Schaltplatine 8, mit der vier nicht dargestellte Drahtkontakte a, b, c und d zusammenarbeiten und die ebenfalls zwei Schaltstellungen I und II hat. Das Ersatzschaltbild ist in Fig. 4 rechts dargestellt.

Fig. 5 zeigt ein Ausführungsbeispiel einer Schaltplatine 8, die durch ein Stanzteil gebildet ist und deren Funktion der Schaltplatine gemäß Fig. 4 entspricht. Die Kontaktbereiche 10 können beispielsweise als Einsenkungen ausgebildet sein, sodaß sich eine gewisse Verrastung ergibt, wenn die Schleifbügel 12 in die Kontaktbereiche 10 gelangen, was die Haptik des Schalters in vorteilhafter Weise beeinflußt.

Fig. 6 verdeutlicht diese Maßnahmen zur Erzielung eines hochqualitiven Bedienungsgefühls bei dem Schalter nochmals. Die Schaltplatine 8 weist im Bereich der Kontaktbereiche 10 unabhängig davon, ob diese Kontaktbereiche 10 elektrisch leitende Bereiche sind oder nicht, Vertiefungen 32 auf, in die die Schleifbügel 12 der Drahtkontakte 14 sich wegen der elastischen Vorspannung der Kontakte 14 hineinbewegen, sodaß eine gewisse "Haltekraft" für das Betätigungsteil entsteht. Es versteht sich, daß die Vertiefungen 32 auch an anderen Stellen ausgebildet sein können, an denen bestimmte Betätigungscharakteristika erwünscht sind, und daß die Vertiefungen durch sich quer über die Schaltplatine 8 erstreckende Nuten gebildet sein können.

Fig. 7 zeigt eine abgeänderte Ausführungsform einer Schaltplatine 8 mit Kontaktbereichen 10 mit einer daran angepaßten Ausführungsform eines Drahtkontakts 14. Die Schaltplatine 8 ist nach unten in einen Steg 34 fortgesetzt, der Vertiefungen 36 aufweist, in die Vorsprünge 38 hineingelangen, wenn die Schaltplatine 8 zusammen mit dem Betätigungsteil 6 (Fig. 2) relativ zum Drahtkontakt 14 verschoben wird. Der Drahtkontakt 14 ist gemäß Fig. 7 nach links elastisch vorgespannt, sodaß der Schleifbügel 12 von dem Vorsprung 38 an der Oberfläche der Schaltplatine abgehoben wird, wenn sich der Vorsprung 38 in keiner Vertiefung 36 befindet. Gelangt der Vorsprung 38 in eine der Vertiefungen 36, so gelangt der Schleifbügel 12 in Anlage an die Oberfläche der Schaltplatine 8. Diese Ausführungsform liefert somit zur Ausgestaltung der Schaltplatine 8 zusätzliche Freiräume und gestattet eine besonders wirksame Beeinflussung der Betätigungshaptik des Schalters.

Es versteht sich, daß an einem Betätigungsteil 6 zahlreiche Schaltplatinen 8, beispielsweise in einer Reihe hintereinander oder an den vier Seiten eines von dem Betätigungsteil nach innen vorstehenden Schachtes ausgebildet sein können, denen entsprechend zahlreiche Drahtkontakte 14 an der Grundplatte 2 zugeordnet sind. Auf diese Weise läßt sich ein außerordentlich komplexer Schalter in hoher Miniaturisierung unmittelbar an einer Leiterplatte anbringen.

Fig. 8 zeigt im Detail die Anbringung des Drahtkontaktes 14 an der Grundplatte 2. Der Drahtkontakt 14 weist an den Schenkeln des U-förmigen Bügels 16 Einbauchungen 24 auf, die einen sicheren Halt an der Grundplatte 2 gewährleisten. Das metallische Material der Leiterbahnen 26 erstreckt sich vorteilhafterweise längs der Stirnwände des Schlitzes 20 und der Wand des Lochs 22, so daß ein sicherer elektrischer Anschluß des Drahtkontaktes 14 an die Leiterbahn 26 gewährleistet ist.

Fig. 9 zeigt ein Beispiel, bei dem der Schleifbereich des Drahtkontaktes 14 nicht lediglich durch dessen Biegen zu einem Schleifbügel gebildet ist, sondern dadurch, daß am Drahtkontakt 14 eine Kontaktpfanne 40 aus geeignetem Kontaktmaterial, das zusätzlich versilbert oder vergoldet sein kann, beispielsweise durch Löten oder Schweißen, befestigt ist.

Fig. 10 zeigt ein anderes Beispiel, bei dem der Schleifbereich dadurch gebildet ist, daß auf den Drahtkontakt 14 ein Röhrchen 42 aus geeignetem Kontaktmaterial aufgeschoben und anschließend verpreßt ist, wobei erst in dem Preßwerkzeug die gebogene Form erzielt wird.

Die beiden Ausführungsformen gemäß Fig. 9 und Fig. 10 haben den Vorteil, daß nicht der gesamte Draht des Drahtkontaktes 14 veredelt werden muß, beispielsweise durch Versilbern oder Vergolden, und daß der Schleifbereich sehr gezielt hinsichtlich Material und Formgebung für lange Betriebszuverlässigkeit auf die Schaltplatine abgestimmt werden kann.

### Bezugszeichen

- 2: Grundplatte
- 4: Gehäusewand
- 6: Betätigungsteil
- 8: Schlatplatine
- 10: Kontaktbereiche
- 12: Schleifbügel
- 14: Drahtkontakt
- 16: U-förmiger Bügel
- 18: freies Ende
- 20: Schlitz
- 22: Loch
- 24: Einbauchungen
- 26: Leiterbahnen
- 28: Steg
- 30: Kunststoffschicht
- 32: Vertiefungen
- 34: Steg
- 36: Vertiefungen
- 38: Vorsprünge
- 40: Kontaktpfanne

## Patentansprüche

1. Schalter, enthaltend
a) eine Grundplatte (2), welche ortsfeste Kontakte (14) trägt, und
b) ein etwa senkrecht relativ zur Grundplatte zwischen wenigstens zwei Stellungen verschiebbares Betätigungsteil (6), welches eine Leiteranordnung trägt, die mit den ortsfesten Kontakten in Eingriff bringbar ist und bei einer Verschiebung des Betätigungssteils eine erste vorbestimmte elektrische Verbindung zwischen den ortsfesten Kontakten in eine zweite vorbestimmte elektrische Verbindung umschaltet,
**dadurch gekennzeichnet, daß**
c) die ortsfesten Kontakte als Drahtkontakte (14) ausgebildet sind, deren eine Enden an der Grundplatte (2) befestigt sind und deren andere Enden einen Schleifbereich (12; 40; 42) aufweisen, und
d) daß die elektrische Leiteranordnung durch eine Schaltplatine (8) gebildet ist, die in den beiden Stellungen des Betätigungsteils (6) die an ihr unter elastischer Vorspannung anliegenden Schleifbügel der Drahtkontakte in vorbestimmter Weise elektrisch miteinander verbindet.

2. Schalter nach Anspruch 1, **dadurch gekennzeichnet, daß** die Drahtkontakte (14) an ihren an der Grundplatte (2) befestigten Enden insgesamt S-förmig abgebogen sind, wobei das freie Ende (18) des S-förmigen Endbereiches in ein Loch (22) der Grundplatte gesteckt ist und die Basis des neben dem freien Ende ausgebildeten, insgesamt U-förmigen Bügels (16) in einen neben dem Loch ausgebildeten Schlitz (20) der Grundplatte gesteckt ist.

3. Schalter nach Anspruch 2, **dadurch gekennzeichnet, daß** wenigstens einer der Schenkel des U-förmigen Bügels (16) mit einer Einbauchung (24) ausgebildet ist, die mit der Grundplatte (2) verrastet.

4. Schalter nach einem der Ansprüche 1 bis 3, **dadurch gekennzeichnet, daß** die Grundplatte (2) als Leiterplatte (2, 26) ausgebildet ist, deren Leiterbahnen (26) mit den Drahtkontakten (14) elektrisch leitend verbunden sind.

5. Schalter nach einem der Ansprüche 1 bis 4, **dadurch gekennzeichnet, daß** von der Grundplatte (2) Stege (28) vorstehen, die die Beweglichkeit der zu den Schleifbügeln (12) führenden Bereiche der Drahtkontakte (14) begrenzen.

6. Schalter nach einem der Ansprüche 1 bis 5, **dadurch gekennzeichnet, daß** die Schaltplatine (8) ein Stanzteil ist.

7. Schalter nach einem der Ansprüche 1 bis 6, **dadurch gekennzeichnet, daß** die Schaltplatine (8) eine Leiterplatte mit den Schleifbereichen (12; 40; 42) zugewandten Kontakten (10) ist.

8. Schalter nach einem der Ansprüche 1 bis 7, **dadurch gekennzeichnet, daß** die Schaltplatine (8) eine Metallplatte ist, die zu den Schleitbereichen (12; 40; 42) hin eine elektrische isolierende Abdeckschicht (30) mit Aussparungen zur Kontaktierung der Metallplatte durch die Schleifbereiche aufweist.

9. Schalter nach einem der Ansprüche 1 bis 8, **dadurch gekennzeichnet, daß** die Schaltplatine (8) von den Drahtkontakten abgetastete Vertiefungen (32) zur Beeinflussung der Betätigungskraft des Betätigungsteils (6) aufweist.

10. Schalter nach einem der Ansprüche 1 bis 9, **dadurch gekennzeichnet, daß** die Anlage der Schleifbereiche (12; 40; 42) an der Schaltplatine (8) durch mit dem Betätigungsteil (6) verbundene Kunststoffstege (34) bestimmt ist, welche von an den Drahtkontakten (14) ausgebildeten Vorsprüngen (38) abgetastet werden.

11. Schalter nach einem der Ansprüche 1 bis 10, **dadurch gekennzeichnet, daß** an dem Betätigungsteil mehrere Schaltplatinen ausgebildet sind, die mit einer Vielzahl entsprechend auf der Grundplatte angeordneter Drahtkontakte zusammenwirken.

12. Schalter nach einem der Ansprüche 1 bis 11, **dadurch gekennzeichnet, daß** der Drahtkontakt (14) im Schleifbereich zu einem Schleifbügel (12) gebogen ist.

13. Schalter nach einem der Ansprüche 1 bis 11, **dadurch gekennzeichnet, daß** der Drahtkontakt im Schleifbereich ein Kontaktteil (40; 42) trägt.

14. Schalter nach Anspruch 13, **dadurch gekennzeichnet, daß** das Kontaktteil ein auf den Drahtkontakt gepreßtes Röhrchen (42) ist.

15. Schalter nach Anspruch 13, **dadurch gekennzeichnet, daß** das Kontaktteil eine am Drahtkontakt befestigte Kontaktpfanne (40) ist.

## Claims

1. Switch, containing
a) a base plate (2), which has stationary contacts (14), and
b) an operating part (6) which can be moved approximately at right angles relative to the base plate between at least two positions and has a conductor arrangement which can be engaged with the stationary contacts and, during movement of the operating part, switches a first predetermined electrical connection between the stationary contacts and a second predetermined electrical connection,
**characterized in that**
c) the stationary contacts are in the form of wire contacts (14), one of whose ends are attached to the base plate (2) and whose other ends have a sliding region (12; 40; 42), and
d) the electrical conductor arrangement is formed by a circuit board (8) which, in both positions of the operating part (6), electrically connects the sliding brackets, which are elastically prestressed such that they rest against it, of the wire contacts to one another in a predetermined manner.

2. Switch according to Claim 1, **characterized in that** the wire contacts (14) are bent overall in an S-shape at their ends which are attached to the base plate (2), with the free end (18) of the S-shaped end region being inserted into a hole (22) in the base plate, and the base of the bracket (16), which is formed alongside the free end and is U-shaped overall, being inserted into a slot (20), which is formed alongside the hole, in the base plate.

3. Switch according to Claim 2, **characterized in that** at least one of the limbs of the U-shaped bracket (16) is formed with an indentation (24), which latches to the base plate (2).

4. Switch according to one of Claims 1 to 3, **characterized in that** the base plate (2) is in the form of a printed circuit board (2, 26), whose conductor tracks (26) are electrically conductively connected to the wire contacts (14).

5. Switch according to one of Claims 1 to 4, **characterized in that** webs (28) project from the base plate (2) and limit the mobility of those regions of the wire contacts (14) which lead to the sliding brackets (12).

6. Switch according to one of Claims 1 to 5, **characterized in that** the circuit board (8) is a stamped part.

7. Switch according to one of Claims 1 to 6, **characterized in that** the circuit board (8) is a printed circuit board with contacts (10) facing the sliding regions (12; 40; 42).

8. Switch according to one of Claims 1 to 7, **characterized in that** the circuit board (8) is a metal plate which, facing the sliding regions (12; 40; 42), has an electrically insulating covering layer (30) with cutouts to make contact with the metal plate through the sliding regions.

9. Switch according to one of Claims 1 to 8, **characterized in that** the circuit board (8) has depressions (32), touched by the wire contacts, for influencing the operating force of the operating part (6).

10. Switch according to one of Claims 1 to 9, **characterized in that** the contact between the sliding regions (12; 40; 42) and the circuit board (8) is governed by plastic webs (34) which are connected to the operating part (6) and are touched by projections (38) formed on the wire contacts (14).

11. Switch according to one of Claims 1 to 10, **characterized in that** there are a number of circuit boards on the operating part, which interact with a large number of wire contacts arranged in a corresponding manner on the base plate.

12. Switch according to one of Claims 1 to 11, **characterized in that** the wire contact (14) is bent to form a sliding bracket (12) in the sliding region.

13. Switch according to one of Claims 1 to 11, **characterized in that** the wire contact has a contact part (40; 42) in the sliding region.

14. Switch according to Claim 13, **characterized in that** the contact part is a small tube (42) which is pressed against the wire contact.

15. Switch according to Claim 13, **characterized in that** the contact part is a contact lug (40) which is attached to the wire contact.

## Revendications

1. Commutateur contenant:
a) une plaque de base (2), qui porte des contacts fixes (14), et
b) une partie d'actionnement (6) qui est déplaçable perpendiculairement à la plaque de base entre au moins deux positions et qui porte un dispositif conducteur qui peut être amené en prise avec les contacts fixes et, dans le cas d'un déplacement de la partie d'actionnement, effectuent une commutation d'une première liaison électrique prédéterminée entre des contacts fixes à une seconde liaison électrique prédéterminée,
**caractérisé en ce que**
c) les contacts fixes sont agencés sous la forme de contacts (14) de fils, dont les premières extrémités sont fixées à la plaque de base (2) et dont les autres extrémités possèdent une partie coulissante (12; 40; 42), et
d) le dispositif conducteur électriques est formé par une platine de circuit (8), qui, dans les deux positions de la partie d'actionnement (6) relie électriquement entre eux d'une manière prédéterminée les étriers coulissants appliqués sous précontrainte élastique contre cette platine, des contacts formé de fils.

2. Commutateur selon la revendication 1, **caractérisé en ce que** les contacts (14) formé de fils sont coudés globalement en forme de S au niveau de leurs extrémités fixées sur la plaque de base (2), l'extrémité libre (18) de la partie d'extrémité en forme de S est enfichée dans un trou (22) de la plaque de base de l'étrier en forme de U (16), formé à côté de l'extrémité libre, est enfiché dans une fente (20) de la plaque de base, qui est formée à côté du trou.

3. Commutateur selon la revendication 2, **caractérisé en ce qu'**au moins l'une des branches de l'étrier en forme de U (16) comporte un renfoncement (24), qui s'encliquette avec la plaque de base (2).

4. Commutateur selon l'une des revendications 1 à 3, **caractérisé en ce que** la plaque de base (2) et agencée sous la forme d'une plaquette à circuits imprimés (2, 26), dont les voies conductrices (26) sont reliées d'une manière électriquement conductrice aux contacts (14) formé de fils.

5. Commutateur selon l'une des revendications 1 à 4, **caractérisé en ce que** sur la plaque de base (2) font saillie des barrettes (28), qui limitent la mobilité des parties des contacts (14) formés de fils, qui conduisent aux étriers coulissants (12).

6. Commutateur selon l'une des revendications 1 à 5, **caractérisé en ce que** la platine de commutation (8) est une pièce découpée.

7. Commutateur selon l'une des revendications 1 à 6, **caractérisé en ce que** la platine à circuits (8) est une plaque à circuits imprimés comportant des contacts (10) associées aux parties coulissantes (12; 40; 42).

8. Commutateur selon l'une des revendications 1 à 7, **caractérisé en ce que** la platine à circuits (8) est une plaque métallique, qui possède, en direction des zones coulissantes (12; 40; 42) une couche de revêtement électriquement isolante (30) comportant des évidements pour l'établissement d'un contact avec la plaque métallique au moyen des parties coulissantes.

9. Commutateur selon l'une des revendications 1 à 8, **caractérisé en ce que** la platine à circuits (8) comporte des renfoncements (32) explorés par les contacts formés de fils pour influer sur la force d'actionnement de l'élément d'actionnement (6).

10. Commutateur selon l'une des revendications 1 à 9, **caractérisé en ce que** l'application des parties coulissantes (12; 40; 42) sur la platine à circuits (8) est déterminée par des barrettes en matière plastique (34) qui sont reliées à la partie d'actionnement (6) et qui sont explorées par des parties saillantes (38) formées sur les contacts formés de fils (14).

11. Commutateur selon l'une des revendications 1 à 10, **caractérisé en ce que** sur la partie d'actionnement sont formées plusieurs platines de commutation, qui coopèrent avec une multiplicité de contacts formés de fils disposés de façon correspondante sur le plaque de base.

12. Commutateur selon l'une des revendications 1 à 11, **caractérisé en ce que** le contact formé de fils (14) est coudé dans la partie coulissante, pour former un étrier coulissant (12).

13. Commutateur selon l'une des revendications 1 à 11, **caractérisé en ce que** le contact formé d'un fil porte, dans la partie coulissante, un élément de contact (40; 42).

14. Commutateur selon la revendication 13, **caractérisé en ce que** l'élément de contact est un petit tube (42) pressé sur le contact formé d'un fil.

15. Commutateur selon la revendication 13, **caractérisé en ce que** la partie de contact est une patte de contact (40) fixée au contact formé d'un fil.
